# EUROPEAN PATENT APPLICATION

(11) **EP 4 578 591 A1**
(43) Date of publication of application: **02.07.2025**
(21) Application number: 23857632.6
(22) Date of filing: 16.08.2023
(51) Int. Cl.: B23K 31/12, B23K 37/04, B23K 101/18

(54) **WELDING SYSTEM AND SYSTEM FOR MONITORING WELDING JIG**

(30) Priority: 24.08.2022 KR 20220106139
(71) Applicant: LG Energy Solution, Ltd., Seoul 07335 (KR)
(72) Inventor: YEON, Kyu Bok, Daejeon 34122 (KR); KANG, Jeong Hwan, Daejeon 34122 (KR)
(74) Representative: Goddar, Heinz J.
(86) International application number: PCT/KR2023/012075
(87) International publication number: WO 2024/043598

(57) **Abstract**

According to one example of the present invention, in order to improve welding defects caused by a welding mask, a welding system may be provided, which comprises: a welding mask having an opening corresponding to a welding line formed, and provided to surround a welding part and a welding line at the top of a welding object upon welding the welding object; a photographing part photographing the welding line after welding completion and photographing the opening periphery of the welding mask upon welding standby; a focus adjusting part coupled to the photographing part to adjust the photographing focus of the photographing part upon photographing the welding line and the welding mask; a mask elevating part lowering the welding mask to be close to the welding object for welding and lifting the welding mask to be spaced apart from the welding object after welding completion; and a monitoring part monitoring a welding state and a state of the welding mask through the photographing information of the photographing part.

## Description

### Technical Field

The present invention relates to a welding monitoring system and a method thereof, and more specifically, relates to a welding and welding jig monitoring system capable of improving welding defects caused by a welding jig by monitoring the status of the welding jig.

### Background Art

Welding using a laser can be used to join plates in a stacked state or to join plates in a state where their parts partially overlap. In addition, the laser welding can be used to join the plates as they extend on the same surface. The laser welding can also be performed manually, but when a production efficiency is increased and the welding process is performed in large quantities, automatic laser welding can be performed.

Spot welding can be performed using a laser, where a plurality of spots can be formed in a row, and the spots can also be formed in multiple rows.

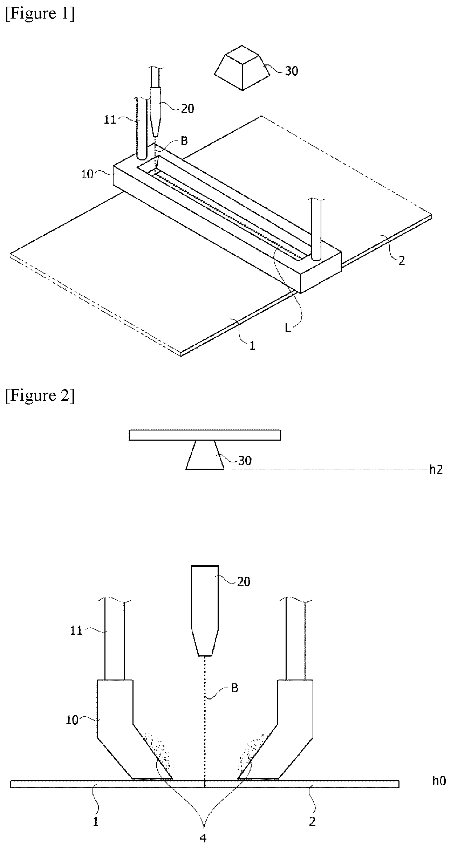

Figures 1 to 3 illustrate one example in which welding is automatically performed through a welding jig upon conventional laser welding.

As shown, upon welding a first plate (1) and a second plate (2), a welding jig (10) pressurizing the first plate (1) and the second plate (2) can be used to prevent separation between the first plate (1) and the second plate (2). The welding jig (10) is moved by a lifting member (11) to a welding surface position (h0) upon welding, and is moved to a welding standby position (h1) after the welding is completed.

That is, when the welding is completed, the welding jig (10) rises and the welded plates can be moved to the next process. Afterwards, as the plates to be welded are transferred to the welding position and the welding jig (10) is lowered, it is possible to fix the plates.

Upon welding of a weld part (20), the welding jig (10) pressurizes the first plate (1) and the second plate (2) so that a weld line between the first plate (1) and the second plate (2) is included. Then, the welding jig (10) may be provided to surround the weld line. Upon welding of the weld part (20), foreign substances (spatter, 4) generated in the process of welding the first plate (1) and the second plate (2) are attached to the welding jig (10), whereby it prevents them from splashing into the first plate (1) and the second plate (2).

Meanwhile, a photographing part (30) is provided to monitor welding quality. The photographing part is provided to photograph a welding line surrounded by the welding jig (10). Since the position of the welding line is always fixed, the focus of the photographing part is also fixed, and thus it photographs images of welding results, whereby it is possible to monitor welding quality.

That is, since the welding is performed automatically, it is common for a monitoring system using such a photographing part to be essentially used.

However, such a monitoring system only monitors welding results and is not suitable for identifying the cause of welding defects. That is, when the welding defect occurs, there is no choice but to identify the cause of the welding defect afterward.

In particular, the foreign substances (4) attached to the welding jig (10) becomes an obstacle factor to a movement path of a welding beam (B), whereby the energy of the welding beam (B) is not transferred to the first plate (1) and the second plate (2), which are welding objects, so that welding defects may occur. That is, it is not easy that welding defects due to foreign substances (4) accumulated in the welding jig (10) are monitored in advance and removed.

To resolve welding defects caused by the path obstruction of the welding beam (B) due to the foreign substances (4) of the welding jig (10), a cleaning process of removing the foreign substances (4) from the welding jig (10) afterward is required.

The conventional photographing part (30) is for photographing the welding state of the first plate (1) and the second plate (2), which are welding objects, where the focus of the photographing part (30) is on the welding surface of the first plate (1) and the second plate (2).

Conventionally, the photographing position (h2) of the photographing part is fixed, whereas the position of the welding jig (10) is moved from the welding surface position (h0) to the welding standby position (h1). The focus of the photographing part is not on the welding jig (10), but on the welding surface of the first plate (1) and the second plate (2), whereby there has been a problem that it difficult to accurately photograph the welding jig (10) at the welding standby position (h1).

The welding jig (10) provides a good welding environment by surrounding a welding rod or welding beam (B), and is provided to prevent foreign substances (spatter) generated during welding from sticking to the welding line or surrounding plates. Therefore, the welding jig (10) can also be called a welding mask.

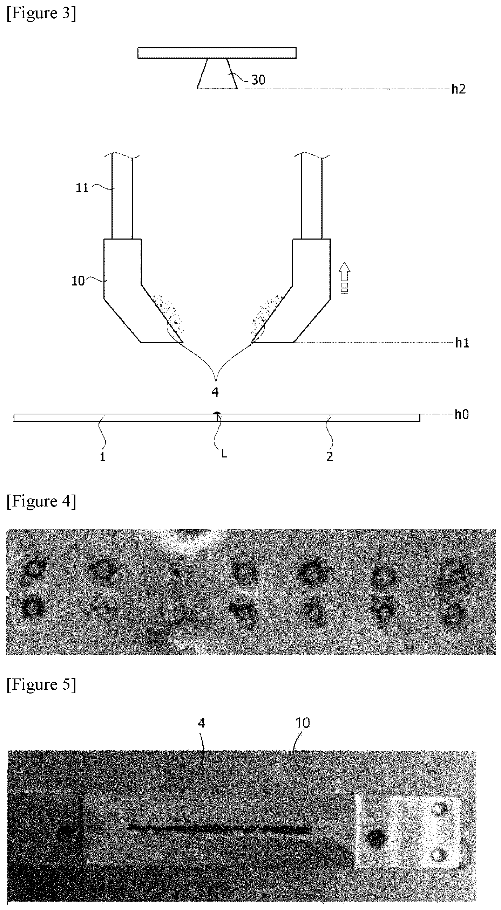

Referring to Figures 4 and 5, the focus of the photographing part (30) is on the welding surface of the first plate (1) and the second plate (2), so that it can be known that it is difficult to accurately confirm the state of foreign substances stacked on the welding jig (10). Figure 4 is an image taken by the photographing part, and Figure 5 is an actual photo of the welding jig upon photographing of the photographing part.

As shown in Figure 5, foreign substances (4) can accumulate on the path of the welding beam in the welding jig (10), and it can be known that welding defects can be caused due to such foreign substances.

Therefore, there is a need to provide an efficient monitoring system that can prevent welding defects in advance by monitoring the status of the welding jig as well as monitoring the welding quality.

### Disclosure

### Technical Problem

It is an object of the present invention to solve problems with conventional welding monitoring systems.

Through one example of the present invention, it is intended to provide a foreign substance monitoring system for a welding jig and a method of monitoring foreign substances in a welding jig which can monitor a stacked state of foreign substances in the welding jig through video by focusing a photographing part on the welding jig based on the position information of the welding jig to obtain photographing information of the welding jig.

Through one example of the present invention, it is intended to provide a monitoring system and method which can monitor a state of a welding jig as well as welding quality through a single photographing part.

Through one example of the present invention, it is intended to provide a monitoring system and method which can exclude additional time loss required for a welding process overall by varying a welding quality monitoring time point and a welding jig monitoring time point.

### Technical Solution

In order to achieve the above-described object, a foreign substance monitoring system for a welding jig according to a preferred example of the present invention is characterized by comprising: a welding jig pressurizing a welding object upon welding of the welding object; a photographing part photographing the welding jig upon welding standby of the welding object; a position adjusting part coupled to the photographing part to adjust the position of the photographing part based on a position information of the welding jig so that the photographing focus of the photographing part is set on the welding jig; and a monitoring part receiving a photographing information to monitor the state of the welding jig.

In a preferred example of the present invention, it is characterized by further comprising a control part calculating a photographing position correction value for an initial photographing position of the photographing part based on the position information of the welding jig, and controlling the operation of the position adjusting part so that the photographing part is moved by the photographing position correction value from the initial photographing position, wherein the initial photographing position is a position where the photographing focus of the photographing part is set on the welding surface of the welding object.

In a preferred example of the present invention, it is characterized in that when the welding jig is moved from a welding surface position to a welding standby position upon welding standby of the welding object, the control part calculates the photographing position correction value by reflecting a standby interval, which is an interval between the welding surface position and the welding standby position, and a focal length of the photographing part.

In a preferred example of the present invention, it is characterized in that the position adjusting part adjusts the position of the photographing part from the initial photographing position to a corrected photographing position to allow the photographing part to photograph the welding jig placed in the welding standby position from the corrected photographing position, thereby providing the photographing information to the monitoring part, wherein the corrected photographing position is a position spaced apart from the initial photographing position by the photographing position correction value, and the welding standby position is a position spaced apart from the welding surface of the welding object by the standby interval.

In a preferred example of the present invention, it is characterized in that the monitoring part receives photographing information and displays it as a video image, whereby a stacked state of foreign substances in the welding jig generated by welding of the welding object is monitored.

In a preferred example of the present invention, it is characterized by further comprising a jig elevating part coupled to the welding jig to adjust the position of the welding jig with respect to the welding surface of the welding object.

In a preferred example of the present invention, it is characterized in that the jig elevating part operates so that the welding jig lowers from the welding standby position to the welding surface position to pressurize the welding object upon welding operation of the welding object, and operates to lift the welding jig from the welding surface position to the welding standby position after welding completion of the welding object, wherein the welding surface position is a position of the welding surface of the welding object, and the welding standby position is a position spaced in one direction of the welding surface of the welding object.

In a preferred example of the present invention, it is characterized by further comprising a welding part irradiating the welding object with a welding beam along a welding line thereof.

In a preferred example of the present invention, it is characterized in that the welding jig is provided with a jig opening through which the welding beam passes, and seated on the welding surface of the welding object so that the jig opening is positioned in a welding region containing the welding line.

In a preferred example of the present invention, it is characterized in that the monitoring part receives photographing information of the welding jig including the jig opening to monitor a state where foreign substances generated upon welding of the welding object are stacked in the jig opening.

A method for monitoring foreign substances in a welding jig according to a preferred example of the present invention is characterized by monitoring a stacked state of foreign substances in the welding jig using the foreign substance monitoring system for the welding jig.

In order to achieve the above-described object, according to one example of the present invention, a welding system may be provided, which comprises: a welding mask having an opening corresponding to a welding line formed, and provided to surround a welding part and the welding line at the top of a welding object upon welding the welding object; a photographing part photographing the welding line after welding completion and photographing the opening periphery of the welding mask upon welding standby; a focus adjusting part coupled to the photographing part to adjust a photographing focus of the photographing part upon photographing the welding line and the welding mask; a mask elevating part lowering the welding mask to be close to the welding object for welding and lifting the welding mask to be spaced apart from the welding object after welding completion; and a monitoring part monitoring a welding state and a state of the welding mask through a photographing information of the photographing part.

When the welding object is fixed through the welding mask, the welding mask may also be referred to as a welding jig.

Through this example, it is possible to monitor both the welding quality and the state of the welding mask. Particularly, a welding monitoring image and a welding mask monitoring image can be acquired through the same photographing part without adding any photographing part.

It is preferable that after the welding mask is completely lowered through the mask elevating part, the welding is performed at a welding surface position (h0), and after the welding is completed, the welding line is photographed through the photographing part.

It is preferable that after the photographing of the welding line is completed, the welding mask is raised through the mask elevating part to prepare for new welding at a welding standby position (h1).

During the welding preparation process, the welding-completed object may be taken out for further processes, and a new welding object may be brought in.

It is preferable that the welding surface position and the welding standby position are preset.

It is preferable that after the welding mask is completely raised through the mask elevating part, the photographing of the welding mask is performed through the photographing part.

It is preferable that before photographing through the photographing part, the focus is automatically adjusted through the focus adjusting part.

The focus set upon photographing of the welding line may be different from the focus set upon photographing of the welding mask. That is, both foci are different, so that focus adjustment is necessary to obtain a clear welding line image and a clear welding mask image.

To this end, the focus can be adjusted automatically in the focus adjusting part.

The focus adjusting part may be provided to adjust the focus by varying the position of the photographing part. That is, by varying the position of the photographing part upon the welding line photographing and the position of the photographing part upon the welding mask photographing, it is possible to adjust an optimal focus in any case.

The focus adjusting part may be provided to vary the position of the photographing part between an initial photographing position (h2) for photographing the welding line and a corrected photographing position (h3) for photographing the welding mask.

It is preferable that, the operation of the mask elevating part and the operation of the focus adjusting part are performed simultaneously. More specifically, it is preferable that the operation of the focus adjusting part is performed and completed within the operating period of the mask elevating part. This means that no additional time is required to operate the focus adjusting part.

Therefore, it can be known that additional time required for focus adjustment between the welding and the welding is unnecessary.

It is preferable that the monitoring part is provided to display the photographing information as an image. Therefore, a monitoring operator can monitor the welding quality and welding mask state intuitively as well as monitor the welding quality and welding mask state through image analyses.

### Advantageous Effects

Through one example of the present invention, it is possible to provide a foreign substance monitoring system for a welding jig and a method of monitoring foreign substances in a welding jig which can monitor a stacked state of foreign substances in the welding jig through video by focusing a photographing part on the welding jig based on the position information of the welding jig to obtain photographing information of the welding jig.

Through one example of the present invention, it is possible to provide a monitoring system and method which can monitor a state of a welding jig as well as welding quality through a single photographing part.

Through one example of the present invention, it is possible to provide a monitoring system and method which can exclude additional time loss required for a welding process overall by varying a welding quality monitoring time point and a welding jig monitoring time point.

### Description of Drawings

Figures 1 and 2 are diagrams for explaining a welding process for a welding object of a welding part.
Figures 3 to 5 are views for explaining a problem which is difficult to monitor a stacked state of foreign substances in a welding jig through images acquired from a photographing part in the conventional technology.
Figure 6 is a configuration diagram of a foreign substance monitoring system for a welding jig according to one example of the present invention.
Figure 7 schematically illustrates a structure diagram of a foreign substance monitoring system for a welding jig according to one example of the present invention.
Figure 8 is a diagram for explaining an operating state of a welding jig upon welding of a welding part in one example of the present invention.
Figure 9 is a diagram for explaining operating states of a welding jig and a position adjusting part upon welding standby of a welding part in one example of the present invention.
Figure 10 is an image captured in a photographing part in one example of the present invention, and Figure 11 is an actual photograph of a welding jig upon photographing of a photographing part.

### Best Mode

The present invention can make various changes and can have various examples, specific examples will be illustrated and described in the drawings.

However, these are not intended to limit the present application to specific embodiments, and it should be understood to include all changes, equivalents, and substitutes included in the spirit and technical scope of the present application. In describing the present application, if it is determined that detailed descriptions of related known technologies may obscure the gist of the present application, the detailed descriptions will be omitted.

The terms such as first or second can be used to describe various components, but the components should not be limited by the terms. The terms are used only to distinguish one component from another.

The terms used in the present application are only used to describe specific examples, which are not intended to limit the present application. Singular expressions include plural expressions unless the context clearly dictates otherwise.

In the present application, it must be understood that the terms such as "comprise" or "have" are intended to designate the presence of features, numbers, steps, operations, components, parts, or combinations thereof described in the specification, but do not exclude in advance the presence or addition possibility of one or more other features, or numbers, steps, operations, components, parts, or combinations thereof.

Therefore, the constitutions shown in examples described in this specification are only the most preferred one example of the present application, and do not represent the entire technical idea of the present application, so that there may be various equivalents and variations which can substitute them at the time of filing the present application.

Also, in the present application, the attached drawings should be understood as being illustrated enlarged or reduced for convenience of explanation.

Hereinafter, with reference to the accompanying drawings, a foreign substance monitoring system for a welding jig and a method for monitoring foreign substances in a welding jig according to a preferred example of the present invention will be described. However, the attached drawings are illustrative, and the scope of the foreign substance monitoring system for the welding jig and the method for monitoring foreign substances in the welding jig of the present application are not limited by the attached drawings.

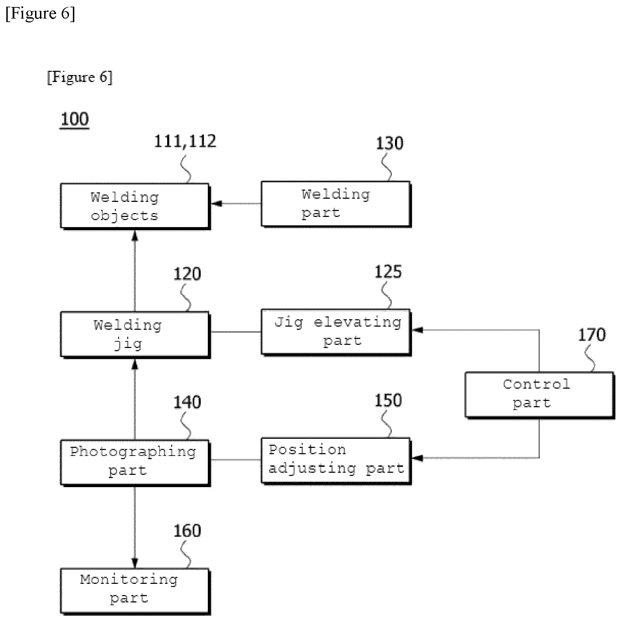

Referring to Figures 6 to 9, the welding system, or the foreign substance monitoring system (100) of the welding jig includes a welding jig (120), a jig elevating part (125), a welding part (130), a photographing part (140), a position adjusting part (150), and a monitoring part (160). The monitoring system (100) may comprise a control part (170) controlling a photographing time point of the photographing part (140).

The control part (170) may be provided to control the operation of the position adjusting part (150) and the jig elevating part (125).

Here, the welding jig (120) may perform a function of preventing welding foreign substances from being splashed into peripheries by surrounding the welding part. Therefore, the welding jig (120) may be referred to as a welding mask. In this case, the jig elevating part (125) may be referred to as a mask elevating part.

In addition, the position adjusting part (150) may be provided to adjust the focus of the photographing part (140). Therefore, the position adjusting part (150) may be referred to as a focus adjusting part.

The welding jig (120) may be provided to restrict the movement of the welding objects (111, 112) by pressurizing the welding objects (111, 112) upon welding of the welding objects (111, 112). The position of the welding jig (120) is adjusted by the jig elevating part (125).

The welding jig (120) is positioned at the welding surface position (h0) upon welding of the welding objects (111, 112). The welding jig (120) is positioned at the welding standby position (h1) upon welding standby of the welding objects (111, 112). The welding standby position (h1) is a position spaced apart from the welding surfaces of the welding objects (111, 112) by the standby interval (Δh1).

That is, the welding jig (120) is provided to be raised and lowered by the operation of the jig elevating part (125), where the elevating time point may be controlled by the control part (170). When the welding is completed, the welding objects (111, 112) are automatically transferred and the new welding objects are positioned at the bottom of the welding jig (120) and the welding part (130). Thereafter, the welding jig (120) is lowered by the jig elevating part (125), whereby new welding can be performed.

The welding jig (120) is provided with a jig opening (121) through which the welding beam (B) passes. The jig elevating part is coupled to the welding jig (120), whereby the welding jig (120) may be lowered in the arrow F1 direction toward the welding objects (111, 112), or may be raised in the arrow F2 direction away from the welding objects (111, 112).

The jig opening (121) may be formed in various shapes depending on the welding position or welding line. For example, the jig opening (121) may be formed in a slit shape that is formed long in the width direction of the welding object.

The jig elevating part (125) may adjust the position of the welding jig (120) with respect to the welding objects (111, 112) according to the operating state of the welding part (130).

The photographing part (140) is positioned at the top of the welding objects (111, 112) and the welding jig (120). The position adjusting part (150) may be coupled to the photographing part (140).

The position adjusting part (150) is a device coupled to a support part (155) to adjust the position of the photographing part (140). The position adjusting part (150) may adjust the photographing position of the photographing part (140) so that the focus is set on the photographing target of the photographing part (140).

The initial photographing position (h2) is a position where the focus of the photographing part (140) is set on the welding surfaces of the welding objects (111, 112). Accordingly, to photograph the welding jig (120) located at the welding standby position (h1), the photographing position of the photographing part (140) must be moved from the initial photographing position (h2) to the corrected photographing position (h3). The corrected photographing position (h3) is a position where the focus of the photographing part (140) is set on the welding jig (120) located at the welding standby position (h1).

When the welding jig (120) is moved from the welding surface position (h0) to the welding standby position (h1) upon welding standby of the welding object, the control part (170) may calculate the photographing position correction value (Δh2) by reflecting a standby interval (Δh1), which is an interval between the welding surface position (h0) and the welding standby position (h1), and a focal length of the photographing part (140).

The control part (170) calculates the photographing position correction value (Δh2) considering the standby interval (Δh1). Here, the standby interval (Δh1) is the interval between the welding surface position (h0) and the welding standby position (h1). The photographing position correction value (Δh2) is the interval between the initial photographing position (h2) and the corrected photographing position (h3).

When the photographing position correction value (Δh2) is calculated in the control part (170), the control part (170) controls the operation of the position adjusting part (150) so that the photographing part (140) is moved from the initial photographing position (h2) by the photographing position correction value (Δh2). Accordingly, the photographing part (140) is positioned to be spaced apart from the welding jig (120) located at the welding standby position (h1) by the focal length.

When the photographing part (140) is located at the corrected photographing position (h3), it can photograph the welding jig (120) located at the welding standby position (h1).

The focus of the photographing part (140) is set on the welding jig (120) at the corrected photographing position (h3), whereby the photographing part (140) may secure an image of the welding jig (120). The photographing part (140) may provide the photographed image of the welding jig (120) to the monitoring part (160).

Meanwhile, the matter of automatically adjusting the focal length by calculating the photographing position correction value can be very complicated or difficult. When the distance change width between the object and the photographing part is preset and when very precise focus adjustment is unnecessary, the preset focus adjustment may be performed. This focus adjustment may also be performed simply by changing the position of the photographing part.

The monitoring part (160) receives photographing information and displays it as an image. The operator can monitor the stacking or accumulation state of the foreign substances (114) of the welding jig (120) generated by welding of the welding objects (111, 112) through the image displayed on the monitoring part (160). Particularly, it is possible to monitor whether the opening is blocked by foreign substances. Of course, the welding quality and jig state can be automatically monitored through an image analysis program.

The monitoring part (160) receives photographing information of the welding jig (120) including the jig opening (121) to monitor a state where the foreign substances (114) generated upon welding of the welding objects (111, 112) are stacked in the jig opening (121).

The present invention can monitor a stacked state of foreign substances (114) in the welding jig (120) through video by focusing the photographing part (140) on the welding jig (120) based on the position information of the welding jig (120) to obtain photographing information of the welding jig (120).

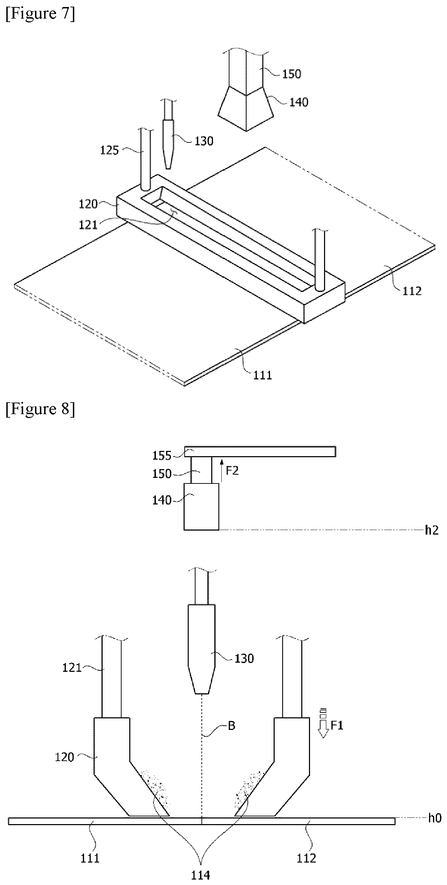

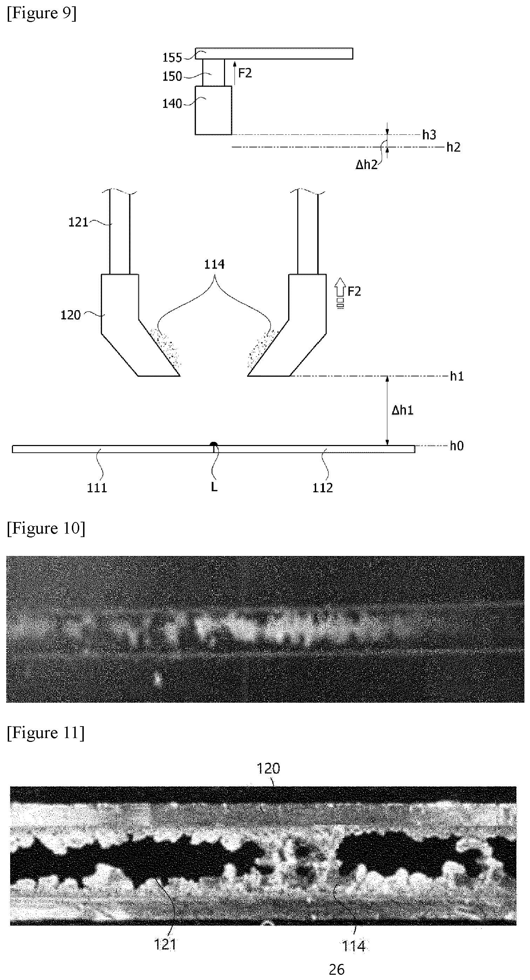

Hereinafter, referring to Figures 8 and 9, the positions of the welding jig (120) and the photographing part (140) according to the operation of the foreign substance monitoring system (100) for the welding jig will be described in more detail.

The welding jig (120) is seated on the welding surfaces of the welding objects (111, 112) so that the jig opening (121) is positioned in a welding region containing the welding line (L). In this instance, the welding jig (120) pressurizes the welding objects (111, 112) at the welding surface position (h0). In this example, the welding objects (111, 112) are referred to separately as a first welding object (111) and a second welding object (112).

The welding part (130) irradiates the welding objects (111, 112) with the welding beam (B) along the welding line (L) thereof. The welding part (130) is a device irradiating the welding objects (111, 112) with the welding beam (B). If the welding part (130) is a device capable of welding the welding objects (111, 112), various types of known welding devices can be used.

The welding beam (B) passes through the jig opening (121) to be irradiated to the welding line of the welding objects (111, 112). The welding line is a connecting line between the first welding object (111) and the second welding object (112). As the welding beam (B) is irradiated to the first welding object (111) and the second welding object (112) along the welding line, the first welding object (111) and the second welding object (112) are connected.

When the welding of the welding part (130) is completed, as shown in Figure 9, the welding jig (120) is moved to the welding standby position (h1). While the welding jig (120) is raised from the welding surface position (h0) to the welding standby position (h1) by the jig elevating part (125) (F2), it is separated from the first welding object (111) and the second welding object (112).

When the welding jig (120) is moved to the standby position, the photographing part (140) is moved by the position adjusting part (150) to focus on the welding jig (120). That is, the photographing part (140) is positioned to be spaced apart from the welding jig (120) by the focal length.

The position adjusting part (150) adjusts the position of the photographing part (140) based on the position information of the welding jig (120) so that the photographing part (140) is spaced apart from the welding jig (120) by the focal length. Accordingly, the photographing part (140) is moved from the initial photographing position (h2) to the corrected photographing position (h3).

Referring to Figures 10 and 11, it can be known that since the focus of the photographing part (140) is set on the welding jig (120), it is possible to accurately check the state of the foreign substances stacked on the welding jig (120). Figure 10 is an image captured by the photographing part (140) in one example of the present invention, and Figure 11 is an actual photograph of the welding jig (120) upon photographing of the photographing part (140).

The operator can check the stacked state of the foreign substances (114) on the welding jig (120) through the captured image of the welding jig (120) displayed on the monitoring part (160) during the welding standby time.

Accordingly, the operator can determine the stacked state of the foreign substances (114) in the welding jig (120) through the image of the welding jig (120) without physically checking the welding jig (120), thereby easily determining whether the foreign substances (114) of the welding jig (120) have been cleaned.

Hereinafter, the present invention will be described in detail through examples. However, the scope of the present invention is not limited by the following examples. The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

It is described in the detailed description of the invention.

## Claims

1. A foreign substance monitoring system for a welding jig **characterized by** comprising:
a welding jig pressurizing a welding object upon welding of the welding object;
a photographing part photographing the welding jig upon welding standby of the welding object;
a position adjusting part coupled to the photographing part to adjust the position of the photographing part based on a position information of the welding jig so that a photographing focus of the photographing part is set on the welding jig; and
a monitoring part receiving a photographing information to monitor a state of the welding jig.

2. The foreign substance monitoring system for a welding jig according to claim 1,
**characterized by** further comprising a control part calculating a photographing position correction value for an initial photographing position of the photographing part based on the position information of the welding jig, and controlling an operation of the position adjusting part so that the photographing part is moved by the photographing position correction value from the initial photographing position, wherein
the initial photographing position is a position where the photographing focus of the photographing part is set on a welding surface of the welding object.

3. The foreign substance monitoring system for a welding jig according to claim 2,
**characterized in that** when the welding jig is moved from a welding surface position to a welding standby position upon welding standby of the welding object, the control part calculates the photographing position correction value by reflecting a standby interval, which is an interval between the welding surface position and the welding standby position, and a focal length of the photographing part.

4. The foreign substance monitoring system for a welding jig according to claim 2,
**characterized in that** the position adjusting part adjusts the position of the photographing part from the initial photographing position to a corrected photographing position to allow the photographing part to photograph the welding jig placed in a welding standby position from the corrected photographing position, thereby providing the photographing information to the monitoring part, wherein
the corrected photographing position is a position spaced apart from the initial photographing position by the photographing position correction value, and
the welding standby position is a position spaced apart from the welding surface of the welding object by a standby interval.

5. The foreign substance monitoring system for a welding jig according to claim 4,
**characterized in that** the monitoring part receives the photographing information and displays it as a video image, whereby
a stacked state of foreign substances in the welding jig generated by welding of the welding object is monitored.

6. The foreign substance monitoring system for a welding jig according to claim 1,
**characterized by** further comprising a jig elevating part coupled to the welding jig to adjust the position of the welding jig with respect to the welding surface of the welding object.

7. The foreign substance monitoring system for a welding jig according to claim 6, **characterized in that** the jig elevating part
operates so that the welding jig lowers from a welding standby position to a welding surface position to pressurize the welding object upon welding operation of the welding object, and
operates to lift the welding jig from the welding surface position to the welding standby position after welding completion of the welding object, wherein
the welding surface position is a position of the welding surface of the welding object, and the welding standby position is a position spaced in one direction of the welding surface of the welding object.

8. The foreign substance monitoring system for a welding jig according to claim 1,
**characterized by** further comprising a welding part irradiating the welding object with a welding beam along a welding line thereof.

9. The foreign substance monitoring system for a welding jig according to claim 8,
**characterized in that** the welding jig is provided with a jig opening through which the welding beam passes, and
seated on the welding surface of the welding object so that the jig opening is positioned in a welding region containing the welding line.

10. The foreign substance monitoring system for a welding jig according to claim 9,
**characterized in that** the monitoring part receives photographing information of the welding jig including the jig opening to monitor a state where foreign substances generated upon welding of the welding object are stacked in the jig opening.

11. A welding system comprising:
a welding mask having an opening corresponding to a welding line formed, and provided to surround a welding part and the welding line at the top of a welding object upon welding the welding object;
a photographing part photographing the welding line after welding completion and photographing the opening periphery of the welding mask upon welding standby;
a focus adjusting part coupled to the photographing part to adjust a photographing focus of the photographing part upon photographing the welding line and the welding mask;
a mask elevating part lowering the welding mask to be close to the welding object for welding and lifting the welding mask to be spaced apart from the welding object after welding completion; and
a monitoring part monitoring a welding state and a state of the welding mask through a photographing information of the photographing part.

12. The welding system according to claim 11,
**characterized in that** after the welding mask is completely lowered through the mask elevating part, the welding is performed at a welding surface position (h0), and after the welding is completed, the welding line is photographed through the photographing part.

13. The welding system according to claim 12,
**characterized in that** after the photographing of the welding line is completed, the welding mask is raised through the mask elevating part to prepare for new welding at a welding standby position (h1).

14. The welding system according to claim 13,
**characterized in that** the welding surface position and the welding standby position are preset.

15. The welding system according to claim 13,
**characterized in that** after the welding mask is completely raised through the mask elevating part, the photographing of the welding mask is performed through the photographing part.

16. The welding system according to claim 15,
**characterized in that** before photographing through the photographing part, the photographing focus is automatically adjusted through the focus adjusting part.

17. The welding system according to claim 16,
**characterized in that** the focus adjusting part is provided to adjust the photographing focus by varying the position of the photographing part.

18. The welding system according to claim 17,
**characterized in that** the focus adjusting part is provided to vary the position of the photographing part between an initial photographing position (h2) for photographing the welding line and a corrected photographing position (h3) for photographing the welding mask.

19. The welding system according to claim 18,
**characterized in that** an operation of the mask elevating part and an operation of the focus adjusting part are performed simultaneously.

20. The welding system according to claim 11,
**characterized in that** the monitoring part is provided to display the photographing information as an image.
